(19) Europäisches Patentamt
European Patent Office
Office européen des brevets

(11) Veröffentlichungsnummer: **0 143 386**
**B1**

# (12) EUROPÄISCHE PATENTSCHRIFT

(45) Veröffentlichungstag der Patentschrift: **03.10.90**

(51) Int. Cl.$^5$: **C 08 L 69/00**

(21) Anmeldenummer: **84113620.3**

(22) Anmeldetag: **12.11.84**

## (54) Verwendung von halogenfreien Polycarbonaten auf Basis von Bis-(3,5-dimethyl-4-hydroxyphenyl)-methan als Flammschutzmittel.

(30) Priorität: **25.11.83 DE 3342636**

(43) Veröffentlichungstag der Anmeldung:
**05.06.85 Patentblatt 85/23**

(45) Bekanntmachung des Hinweises auf die Patenterteilung:
**03.10.90 Patentblatt 90/40**

(84) Benannte Vertragsstaaten:
**DE FR GB IT**

(56) Entgegenhaltungen:
**EP-A-0 013 904**
**EP-A-0 023 571**
**EP-A-0 046 558**
**EP-A-0 146 023**
**DE-A-2 248 817**
**FR-A-2 347 395**

(73) Patentinhaber: **BAYER AG**
**D-5090 Leverkusen 1 Bayerwerk (DE)**

(72) Erfinder: **Serini, Volker, Dr.**
**Scheiblerstrasse 81**
**D-4150 Krefeld (DE)**
Erfinder: **Müller, Friedemann, Dr.**
**Am Steinacker 5**
**D-4040 Neuss 21 (DE)**
Erfinder: **Nising, Wolfgang, Dr.**
**Mainstrasse 4**
**D-5205 St. Augustin 2 (DE)**
Erfinder: **Buysch, Hans-Josef, Dr.**
**Brandenburger Strasse 28**
**D-4150 Krefeld (DE)**
Erfinder: **Freitag, Dieter, Dr.**
**Hasenheide 10**
**D-4150 Krefeld (DE)**
Erfinder: **Kauth, Hermann, Dr.**
**Kolping Strasse 34**
**D-4150 Krefeld (DE)**

**EP 0 143 386 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

## Beschreibung

Halogenfreie Polycarbonate aus Bis-(3,5-dimethyl-4-hydroxyphenyl)-methan und gegebenenfalls anderen Diphenolen sind bekannt (siehe DE—OS 2 064 050, DE—OS 2 211 957 und V. Serini, D. Freitag und H. Vernaleken, Angew. Makrom. Chem. 55, (1976) Seiten 175—189).

Sie wurden bislang nicht als flammwidrig erkannt (siehe DE—OS 2 248 817, insbesondere Beispiel 4, Seite 11).

Überraschenderweise wurde nun gefunden, daß thermoplastische, halogenfreie Polycarbonate auf Basis von Bis-(3,5-dimethyl-4-hydroxyphenyl)-methan in Gegensatz etwa zu solchen auf Basis von 2,2-Bis-(3,5-dimethyl-4-hydroxyphenyl)-propan ausgezeichnete flammwidrige Eigenschaften besitzen, gemessen nach UL Subject 94 oder nach dem $O_2$-Index gemessen nach ASTM-D 2863-A.

Derartige Polycarbonate sind daher geeignet, Gegenstände flammwidrig zu machen, also als Flammschutzmittel für Gegenstände zu dienen, ohne daß die Mitverwendung sonst üblicher flammwidrigmachender Zusätze wie Halogenverbindungen, Metallverbindungen, Phosphor-haltiger Substanzen oder Schwefel-haltiger Substanzen erforderlich wäre.

Die erfindungsgemäß als Flammschutzmittel wirksamen thermoplastischen Polycarbonate auf Basis von Bis-(3,5-dimethyl-4-hydroxyphenyl)-methan haben mittlere Molekulargewichte $\overline{M}w$ (Gewichtsmittel, bestimmt nach der Lichtstreumethode) von 10 000 bis 200 000, vorzugsweise von 20 000 bis 80 000 un insbesondere von 25 000 bis 60 000.

Die Wirksamkeit als Flammschutzmittel hängt von der Menge an Carbonatstrucktureinheiten der Formel (I) im Polycarbonatmolekül ab

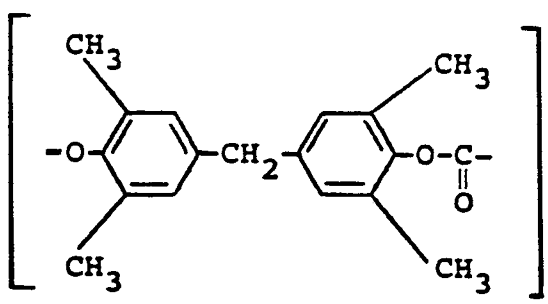

(I),

wobei bei 100 Mol % an (I) die höchste Wirksamkeit und bei 1 Mol % der Wirksamkeit praktisch nicht mehr vorhanden ist.

Eine sehr hohe flammwidrige Wirksamkeit, d.h. ein VO nach UL Subject 94 bei $\frac{1}{32}$'' Dicke erreicht man etwa bei 50 Mol-% an Struktureinheiten der Formel (I), wobei eine gewisse Abhängigkeit von der Art des cokondensierten anderen Diphenols, also beispielsweise von der Art der Struktureinheiten (II)

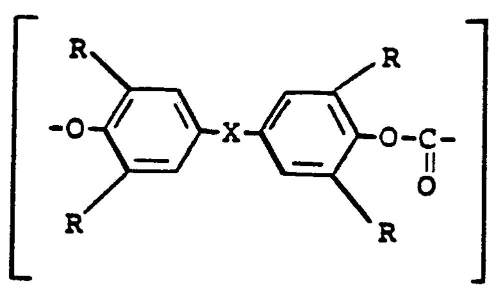

(II)

gegeben ist. Dann, wenn R = Alkyl, insbesondere $CH_3$, und X = $C_2$—$C_6$-Alkylen, $C_2$—$C_6$-Alkyliden, Cyclohexylen oder Cyclohexyliden, eine Einfachbindung oder ein Rest der Formel

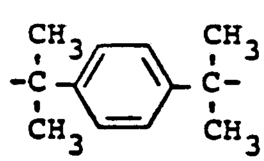

bedeuten, sind diese wirksamer als dann, wenn R = Wasserstoff und X eine genannten Reste bedeuten.

Eine geeignete andere Struktureinheit für die Kombination mit den Struktureinheiten (I) ist auch die der folgenden Formel (IIa)

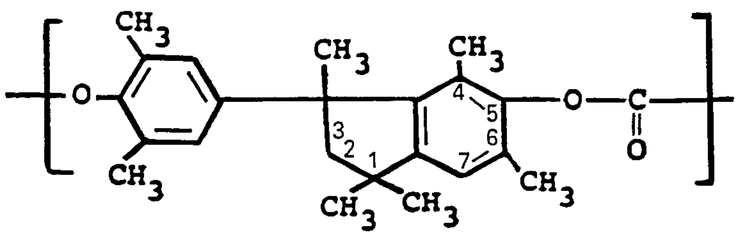

(IIa).

Eine zweite Meßmethode für die Flammwidrigkeit, der Sauerstoffindex liefert bereits bei etwa 25 Mol-% an Struktureinheiten der Formel (I) Werte über 30, was immer noch eine recht gute Flammwidrigkeit bedeutet.

Somit sind erfindungsgemäß zu verwendende Polycarbonate auf Basis von Bis-(3,5-dimethyl-4-hydroxyphenyl)-methan solche, die mindstens etwa 25 Mol-% in Struktureinheiten der Formel (I), vorzugsweise mindestens etwa 40 Mol-% un insbesondere mindestens etwa 70 Mol-% an Struktureinheiten der Formel (I) enthalten. Die höchste Flammwidrigkeit besitzen die Homopolycarbonate aus Bis-(3,5-dimethyl-4-hydroxyphenyl)-methan.

Die komplementären Mengen an anderen Carbonatstruktureinheiten entsprechen somit maximal etwa 75 Mol-%, vorzugsweise maximal etwa 60 Mol-%, insbesondere maximal etwa 30 Mol-% und im meist bevorzugten Fall 0 Mol-%, und können durch die Strukturformel (III)

$$[-O-D-O-\underset{\underset{O}{\|}}{C}-] \qquad (III)$$

dargestellt werden, worin —O—D—O— ein halogenfreier, schwefelfreier und phosphorfreier Diphenolat-Rest mit Ausnahme gemäß Struktur (I) ist, der vorzugsweise nur aus C-, H- und O-Atomen aufgebaut ist, und vorzugsweise 6 bis 30 C-Atome hat.

Bevorzugt vorliegende, andere Carbonatstruktureinheiten sind die der Formeln (II) und (IIa).

Gegenstand der vorliegenden Erfindung ist somit die Verwendung von halogenfreien, schwefelfreien und phosphorfreien Polycarbonaten, die 25 Mol-% bis 100 Mol-%, vorzugsweise 40 Mol-% bis 100 Mol-%, insbesondere 70 Mol-% bis 100 Mol-% und ganz besonders 100 Mol-% an bifunktionellen Struktureinheiten der Formel (I) und 75 Mol-% bis 0 Mol-%, vorzugsweise 60 Mol-% bis 0 Mol-%, insbesondere 30 Mol-% bis 0 Mol-% und ganz besonders 0 Mol-% an anderen bifunktionellen Struktureinheiten der Formel (III), vorzugsweise an Struktureinheiten der Formel (II) und/oder (IIa) enthalten, als Flammschutzmittel zur Herstellung von flammwidrig auszurüstenden Gegenständen aus thermoplastischen Kunststoffen.

Anstelle von Copolycarbonaten mit Struktureinheiten der Formeln (I) und (III) sind auch Mischungen der entsprechenden Homopolycarbonate verwendbar.

Die erfindungsgemäß verwendbaren Polycarbonate können in bekannter Weise durch den Einbau von halogenfreien, schwefelfreien und phosphorfreien Verzweigern verzweigt sein.

Halogenfreie Polycarbonate im Sinne der vorliegenden Erfindung bedeutet, daß die Polycarbonate aus halogenfreien Diphenolen, halogenfreien Kettenabbrechern und gegebenenfalls halogenfreien Verzweigern aufgebaut sind, wobei der Gehalt an untergeordneten ppm Mengen an verseifbarem Chlor, resultierend beispielsweise aus der Herstellung der Polycarbonate mit Phosgen nach dem Phasengrenzflächenverfahren, nicht als halogenhaltig im Sinne der Erfindung anzusehen ist. Derartige Polycarbonate mit ppm-Gehalten an verseifbaren Chlor sind halogenfreie Polycarbonate im Sinne vorliegender Erfindung. Entsprechendes gilt für schwefelfreie beziehungsweise phosphorfreie Polycarbonate, S- oder P-haltige Verunreinigungen, resultierend beispielsweise aus der Aufarbeitung des Polycarbonats, würden nicht mitzählen.

Die Herstellung der zum Flammschutz erfindungsgemäß verwendbaren Polycarbonate ist bekannt und beispielsweise in den eingangs erwähnten Deutschen Offenlegungsschriften beschrieben.

Geeignete andere Diphenole HO—D—OH (IV), als Bis-(4-hydroxy-3,5-dimethyl-phenyl)-methan, sind beispielsweise Hydrochinon, Resorcin, Dihydroxydiphenyle, Bis-(hydroxyphenyl)-alkane, Bis-(hydroxyphenyl)-cycloalkane, Bis-(hydroxyphenyl)-ether, Bis-(hydroxyphenyl)-ketone und α,α'-Bis-(hydroxyphenyl)-diisopropylbenzole sowie deren kernalkylierte Abkömmlinge. Diese und weitere geeignete Diphenole sind beispielsweise in der Monographie Hermann Schnell, Chemistry and Physics of Polycarbonates, der Veröffentlichung V. Serini, D. Freitag, H. Vernaleken, Polycarbonate aus o,o,o',o'-tetramethylsubstituierten Bisphenolen Angew. Makrom. Chem. *55* (1976) 175—189 und den deutschen Offenlegungsschriften 20 63 050, 2211 957, 26 15 038 und 22 48 817 beschrieben.

Bevorzugte andere Diphenole (IV) sind 2,2-Bis-(4-hydroxyphenyl)-propan, Bis-(4-hydroxyphenyl), 1,1-Bis-(4-hydroxyphenyl)-cyclohexan, α,α'-Bis-(4-hydroxyphenyl)-p-diisopropylbenzol, 2,2-Bis-(3-methyl-4-hydroxyphenyl)-propan und 1,1,3,4,6-Pentamethyl-3-(3,5-dimethyl-4-hydroxyphenyl)-indan-5-ol.

Die erfindungsgemäß als Flammschutzmittel verwendbaren Polycarbonate können noch Füllstoffe, wie Mineralien oder Ruß, Verstärkungsstoffe, wie Glasfasern oder Kohlenfasern, Stabilisatoren wie UV-, Oxidations- und Thermostabilisatoren, Entformungsmittel, Farbstoffe oder Pigmente oder andere übliche Zusatzstoffe enthalten.

Die erfindungsgemäß als Flammschutzmittel verwendbaren Polycarbonate sind überall dort einsetzbar, wo der Einsatz von flammwidrigen thermoplastischen Kunststoffen, insbesondere von flammwidrigen thermoplastischen Polycarbonaten gefordert ist, also beispielsweise im Gerätesektor, im Elektro- und Elektronikbereich, im Installations- und Heizungsbereich sowie auf dem Verkehrssektor.

Beispiele für den Einsatz der flammwidrigen Polycarbonate sind Kaffeemaschinen, Elektroherde, Grillgeräte, Bügeleisen, Waschmaschinen, Filmgërate, Diaprojektoren, Verkabelungen, Telefonanlagen, Fernschreibanlagen, Kabelfernsehanlagen, Elektromotoren, Klimaanlagen, Rechenanlagen, Beleuchtungsanlagen, elektrische Installationen im Wohn- und Industriebereich, Radiogeräte, Fernsehgeräte, Plattenspieler, Videorecorder, Automobile und Flugzeuge.

Einige spezielle Beispiele für die erfindungsgemäße Verwendung der Polycarbonat-Flammschutzmittel sind Aschenbecher in Automobilen, Speisetabletts in Flugzeugen, Instrumententräger in Automobilen, Lampenhalterungen, Träger elektrischer und elektronischer Bauteile in verschiedensten Geräten sowie Abdeckungen für Sicherungselemente und Stromschalter in elektrischen Anlagen.

### Beispiel 1

Copolycarbonate aus Bis-(3,5-dimethyl-4-hydroxyphenyl)-methan (TMBPF) und 2,2-Bis-(3,5-dimethyl-4-hydroxyphenyl)-propan (TMBPA)

Aus TMBPF und TMBPA wurden nach dem Zweiphasengrenzflächenverfahren mit Phosgen Copolycarbonate, zum Vergleich auch Homopolycarbonate allein aus TMBPF und allein aus TMBPA, hergestellt. Die erhaltenen Polycarbonate wurden zur Entfernung der Restlösemittel einer Extrusion mit Vakuumabzug unterworfen und dann über die Schmelze zu Prüfkörpern verarbeitet. An diesen wurden die in der Tabelle enthaltenen Prüfwerte erhalten. Es zeigt sich, daß die TMBPF einkondensiert enthaltenen Polycarbonate eine außerordentlich hohe Flammwidrigkeit zeigen (kurze Brennzeiten, kein Abtropfen). Selbst bei den dünnsten Prüfstäben von nur 1/32 Zoll (0,8 mm) Stärke werden noch Einstufungen in die höchste Flammwidrigkeitsklasse nach UL Subjekt 94-VO erhalten. Außerdem werden sehr hohe $O_2$-Index-Werte erreicht. Bei den Prüfkörpern, die dagegen kein TMBPF, sondern nur TMBPA einkondensiert enthalten, wird eine Einstufung in eine UL-Flammwidrigkeitsklasse (Subj. 94, VO, VI, VII) nicht erreicht und der $O_2$-Index liegt niedrig.

| Beispiel 1 | Polycarbonat | | | Flammwidrigkeit UL Subjekt 94 Prüfstabdicken (Zoll) | | | $O_2$-Index % ASTM-D 2863—A |
|---|---|---|---|---|---|---|---|
| | Eingesetzte Bisphenole | Molanteile eingesetzte Bisphenole | η rel (in $CH_2Cl_2$ 5 g/l) | 1/8″ | 1/16″ | 1/32″ | |
| a | TMBPF/TMBPA | 100/0 | 1,327 | VO | VO | VO | — |
| b | ″ | 75/25 | 1,312 | VO | VO | VO | 38,5 |
| c | ″ | 50/50 | 1,310 | VO | VO | VO | 36,0 |
| d | ″ | 25/75 | 1,323 | — | — | — | 34,5 |
| e (Vergleich) | ″ | 0/100 | 1,325 | n | n | n | 24,5 |

n = nicht bestanden bzw. nicht eingestuft
— = Test nicht durchgeführt

### Beispiel 2

Vergleich von Copolycarbonaten des Bis-(3,5-dimethyl-4-hydroxyphenyl)-methan (TMBPF) mit 2,2-Bis-(3,5-dimethyl-4-hydroxyphenyl)-propan (TMBPA) und 2,2-Bis-(4-hydroxyphenyl)-propan (BPA)

Die in der Tabelle aufgeführten Polycarbonate wurden hergestellt, wie in Beispiel 1 beschrieben. Es

zeigt sich beim Vergleich der Copolycarbonate des TMBPF mit TMBPA und des TMBPF mit BPA, daß die ersteren eine höhere Flammwidrigkeit aufweisen.

| Beispiel 2 | Polycarbonat | | | $O_2$-Index % ASTM D 2863-77 | Flammwidrigkeit UL Subj. 94 Prüfstabdicken 1/16 Zoll |
|---|---|---|---|---|---|
| | eingesetzte Bisphenole | Molanteile eingesetzte Bisphenole | η rel (in $CH_2Cl_2$ 5 g/l) | | |
| a | TMBPF/TMBPA | 50/50 | 1,313 | 35,0 | VO |
| b | TMBPF/BPA | 50/50 | 1,311 | 31,5 | VII |
| c | TMBPA | 100 | 1,320 | 24,5 | n |
| d | BPA | 100 | 1,315 | 26,0 | n |

n = nicht bestanden bzw. nicht eingestuft

Beispiel 3

Mischungen von Polycarbonaten

Die in der Tabelle aufgeführten Polycarbonate wurden hergestellt, wie in Beispiel 1 beschrieben. Die Mischung der einzelnen Polycarbonate erfolgte mit Hilfe eines Doppelwellenextruders über die Schmelze. Es zeigt sich, daß Polycarbonatmischungen bei gleichem TMBPF-Anteil ähnliche Flammwidrigkeit zeigen, wie entstehende Copolycarbonate (vgl. Beispiele 1 und 2).

| Beispiel 3 | Polycarbonatmischung | | | $O_2$-Index % % ASTM D 2863-A |
|---|---|---|---|---|
| | Polycarbonate | Mischungs-verhältnis Molanteile | η rel (in $CH_2Cl_2$ c = 5 g/l) | |
| a | TMBPF-PC/TMBPA-PC | 50/50 | 1,305 | 35,5 |
| b | TMBPF-PC/BPA-PC | 50/50 | 1,313 | 31,0 |

## Patentansprüche

1. Verwendung von halogenfreien schwefelfreien und phosphorfreien Polycarbonaten, die 25 Mol-% bis 100 Mol-% an bifunktionellen Strukturheinheiten der Formel

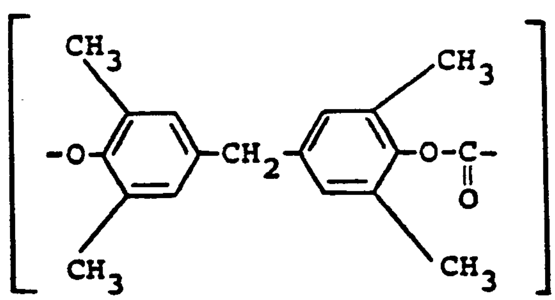

(I),

und 75 Mol-% bis 0 Mol-% an anderen bifunktionellen Struktureinheiten der Formel

$$[-O-D-O-\underset{\underset{O}{\|}}{C}-] \qquad (III)$$

worin —O—D—O— ein halogenfreier, schwefelfreier und phosphorfreier Diphenolat-Rest ist, enthalten, als Flammschutzmittel zur Herstellung von flammwidrig auszurüstenden Gegenständen aus thermoplastichen Kunststoffen.

2. Verwendung der Polycarbonate gemäß Anspruch 1, dadurch gekennzeichnet, daß die Polycarbonate

25 Mol-% bis 100 Mol-% an bifunktionellen Struktureinheiten der Formel I und 75 Mol-% bis 0 Mol-% an bifunktionellen Struktureinheiten der Formel II und/oder IIa enthalten,

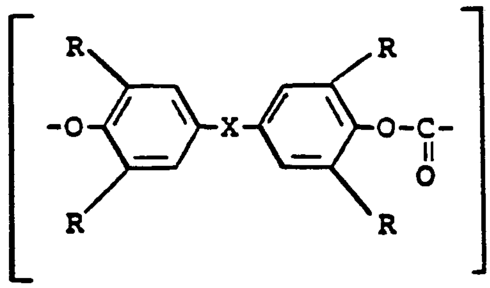

(II)

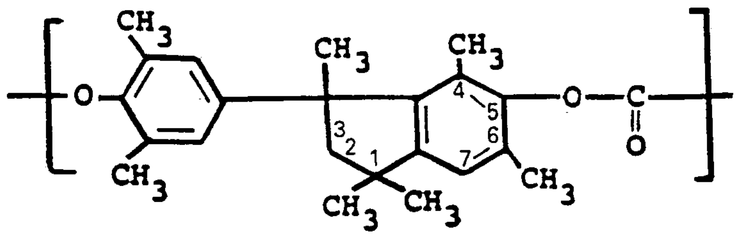

(IIa).

worin R Alkyl oder H und X $C_2$—$C_6$-Alkylen, $C_2$—$C_6$-Alkyliden, Cyclohexylen, Cyclohexyliden, eine Einfachbindung oder einen Rest der Formel

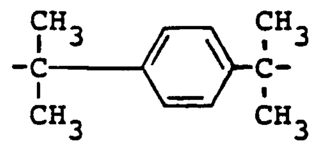

bedeuten.

3. Verwendung der Polycarbonate gemäß Ansprüche 1 und 2, dadurch gekennzeichnet, daß die Polycarbonate 40 Mol-% bis 100 Mol-% an bifunktionellen Struktureinheiten der Formel I enthalten.

4. Verwendung der Polycarbonate gemäß Ansprüche 1 und 2, dadurch gekennzeichnet, daß die Polycarbonate 70 Mol-% bis 100 Mol-% an bifunktionellen Struktureinheiten der Formel I enthalten.

5. Verwendung der Polycarbonate gemäß Ansprüche 1 und 2, dadurch gekennzeichnet, daß die Polycarbonate 100 Mol-% an bifunktionellen Struktureinheiten der Formel I enthalten.

**Revendications**

1. Utilisation de polycarbonates dépourvus d'halogènes, de soufre et de phosphore, qui contiennent 25 à 100 moles % de motifs structuraux bifonctionnels de formule

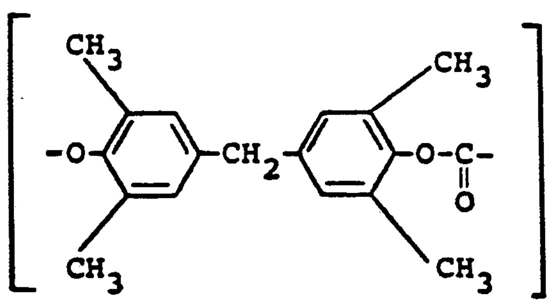

(I),

et 75 à 0 mole % d'autres motifs structuraux bifonctionnels de formule

[—O—D—O—C—]
||
O

où —O—D—O— est un reste diphénolate dépourvu d'halogène, de soufre et de phosphore, comme agent retardateur de flamme pour la production d'objets en matière thermoplastique rendus aptes à résister à la propagation de la flamme.

2. Utilisation des polycarbonates suivant la revendication 1, caractérisée en ce que les polycarbonates

contiennent 25 à 100 moles % de motifs structuraux bifonctionnels de formule I et 75 à 0 mole % de motifs structuraux bifonctionnels de formule II et/ou de formule IIa

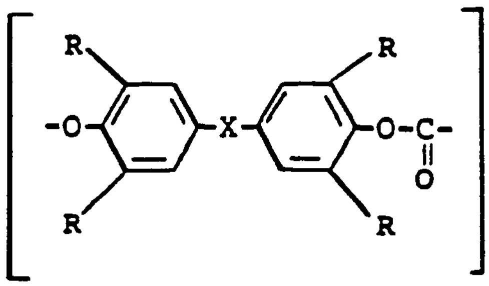

(II)

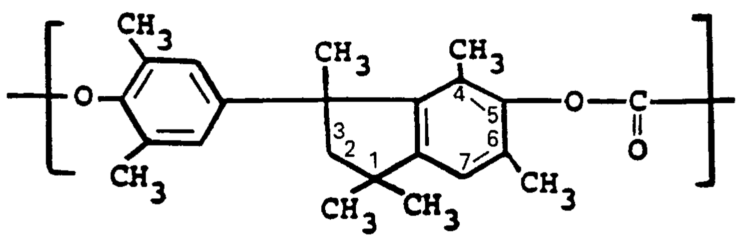

(IIa).

où R est un groupe alkyle ou un atome d'hydrogène et X est un groupe alkylène en $C_2$ à $C_6$, alkylidène en $C_2$ à $C_6$, cyclohexylène, cyclohexylidène, une liaison simple ou un reste de formule

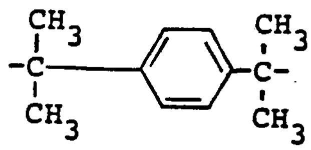

3. Utilisation des polycarbonates suivant les revendications 1 et 2, caractérisée en ce que les polycarbonates contiennent 40 à 100 moles % de motifs structuraux bifonctionnels de formule I.

4. Utilisation des polycarbonates suivant les revendications 1 et 2, caractérisée en ce que les polycarbonates contiennent 70 à 100 moles % de motifs structuraux bifonctionnels de formule I.

5. Utilisation des polycarbonates suivant les revendications 1 et 2, caractérisée en ce que les polycarbonates contiennent 100 moles % de motifs structuraux bifonctionnels de formule I.

## Claims

1. The use of halogen-free, sulfur-free and phosphorus-free polycarbonates containing 25 mol-% to 100 mol-% of bifunctional structural units corresponding to the formula

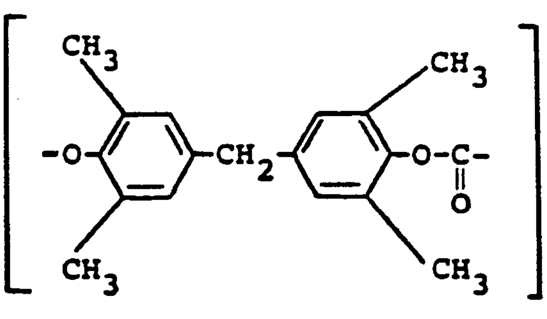

(I),

and 75 mol-% to 0 mol-% of other bifunctional structural units corresponding to the formula

$$[O—D—O—\underset{\underset{O}{\|}}{C}—] \qquad (III)$$

in which —O—D—O— is a halogen-free, sulfur-free and phosphorus-free diphenolate residue, as flameproofing agents for the production of articles of thermoplastics to be given a flame-resistant finish.

2. The use of polycarbonates as claimed in claim 1, characterized in that the polycarbonates contain 25

mol-% to 100 mol-% of the bifunctional structural units corresponding to formula I and 75 mol-% to 0 mol-% of the bifunctional structural units corresponding to formula II and/or IIa

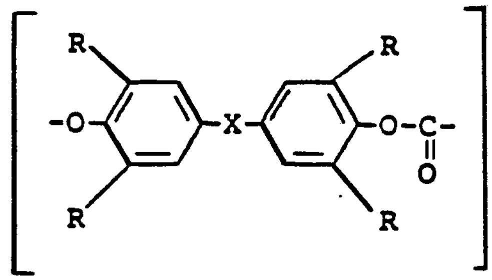

(II)

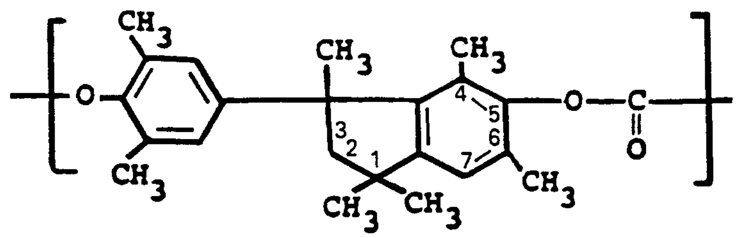

(IIa) .

in which R is alkyl or H and X is $C_{2-6}$ alkylene, $C_{2-6}$ alkylidene, cyclohexylene, cyclohexylidene, a single bond or a group corresponding to the formula

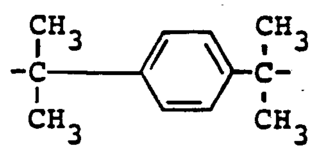

3. The use of polycarbonates as claimed in claims 1 and 2, characterized in that the polycarbonates contain 40 mol-% to 100 mol-% of the bifunctional structural units corresponding to formula I.

4. The use of polycarbonates as claimed in claims 1 and 2, characterized in that the polycarbonates contain 70 mol-% to 100 mol-% of the bifunctional structural units corresponding to formula I.

5. The use of polycarbonates as claimed in claims 1 and 2, characterized in that the polycarbonates contain 100 mol-% of the bifunctional structural units corresponding to formula I.